Europäisches Patentamt

European Patent Office

Office européen des brevets

(19)

(11) Veröffentlichungsnummer: **0 278 518 B1**

(12) **EUROPÄISCHE PATENTSCHRIFT**

(45) Veröffentlichungstag der Patentschrift: **22.05.91**

(51) Int. Cl.⁵: **C04B 28/14**, //(C04B28/14, 24:26,24:42)

(21) Anmeldenummer: **88102075.4**

(22) Anmeldetag: **12.02.88**

(54) **Verfahren zur Herstellung von wasserabweisenden Gegenständen aus Gips und Hydrophobierungsmittel enthaltende Gipspulver.**

(30) Priorität: **12.02.87 DE 3704439**

(43) Veröffentlichungstag der Anmeldung:
**17.08.88 Patentblatt 88/33**

(45) Bekanntmachung des Hinweises auf die
Patenterteilung:
**22.05.91 Patentblatt 91/21**

(84) Benannte Vertragsstaaten:
**AT BE CH DE FR GB IT LI NL**

(56) Entgegenhaltungen:
**CH-A- 383 246**
**DE-A- 2 044 457**
**DE-A- 2 740 049**
**FR-A- 2 153 579**
**FR-A- 2 166 536**

(73) Patentinhaber: **WACKER-CHEMIE GMBH**
**Prinzregentenstrasse 22**
**W-8000 München 22(DE)**

(72) Erfinder: **Demlehner, Ulrich, Dr. Dipl.-Chem.**
**Obere-Dorfstrasse 41**
**W-8261 Emmerting(DE)**
Erfinder: **Eck, Herbert, Dr. Dipl.-Chem.**
**Burg 11**
**W-8263 Burghausen(DE)**
Erfinder: **Hopf, Heinrich**
**Mehringer Strasse 49a**
**W-8263 Burghausen(DE)**
Erfinder: **Pilzweger, Erich**
**Hechenbergstrasse 16**
**W-8263 Burghausen(DE)**
Erfinder: **Zeller, Otto**
**Mattigstrasse 34**
**A-5280 Braunau(AT)**

Rank Xerox (UK) Business Services

## Beschreibung

Aus US 3 455 710 (ausgegeben 15. Juli 1969, S. Nitzsche et al., Wacker-Chemie GmbH) ist es bekannt, Si-gebundenen Wasserstoff enthaltendes Organopolysiloxan in Form einer wäßrigen Emulsion Gips vor dessen endgültiger Formgebung zuzusetzen, um wasserabweisende Gegenstände aus dem Gips zu erhalten. Aus Chemical Abstracts, Vol. 89, 1978, Referat 29 818 w ist weiterhin bekannt, Si-gebundenen Wasserstoff enthaltendes Organopolysiloxan in Abwesenheit von Wasser mit Gipspulver zu vermischen, um nach Zusatz von Wasser aus den so erhaltenen Gemischen wasserabweisende Formkörper oder Überzüge herstellen zu können.

Es bestand nun bei Verfahren zur Herstellung von wasserabweisenden Gegenständen aus Gips unter Verwendung von Si-gebundenen Wasserstoff enthaltendem Organopolysiloxan die Aufgabe, Si-gebundenen Wasserstoff enthaltendes Organopolysiloxan mit besonders geringem Aufwand mit dem Gips vor dessen endgültiger Formgebung zu vermischen. Es bestand weiterhin die Aufgabe, lagerbeständige, Hydrophobierungsmittel enthaltende Gipspulver, wobei das Hydrophobierungsmittel Si-gebundenen Wasserstoff enthaltendes Organopolysiloxan ist, bereitzustellen, die frei von Stoffen sind, welche das Abbindeverhalten des Gipses nachteilig verändern oder zu Ausblühungen auf den aus dem Gips hergestellten Gegenständen führen können, und denen vor der endgültigen Formgebung lediglich noch Wasser zugesetzt werden muß, wobei auch bei Organopolysiloxangehalten von mehr als 0,5 Gewichtsprozent, bezogen auf das Gewicht des Gipspulvers, keine Benetzungsschwierigkeiten auftreten. Diese Aufgaben werden durch die Erfindung gelöst.

Gegenstand der Erfindung ist ein Verfahren zur Herstellung von wasserabweisenden Gegenständen aus Gips unter Verwendung von Si-gebundenen Wasserstoff enthaltendem Organopolysiloxan, dadurch gekennzeichnet, daß das Si-gebundenen Wasserstoff enthaltende Organopolysiloxan in Form eines Pulvers eingesetzt wird, das durch Sprühtrocknung eines Gemisches, dessen Bestandteile mindestens Wasser, Si-gebundenen Wasserstoff enthaltendes Organopolysiloxan und wasserlösliches, filmbildendes Polymer mit einem Trübungspunkt von 35°C bis 98°C sind, hergestellt wurde. Gegenstand der Erfindung sind weiterhin Hydrophobierungsmittel enthaltende Gipspulver, wobei das Hydrophobierungsmittel mindestens zum Teil Organopolysiloxan ist, das Si-gebundenen Wasserstoff enthält, dadurch gekennzeichnet, daß das Si-gebundenen Wasserstoff enthaltende Organopolysiloxan in einem Pulver vorliegt, das durch Sprühtrocknung eines Gemisches, dessen Bestandteile mindestens Wasser, Si-gebundenen Wasserstoff enthaltendes Organopolysiloxan und wasserlösliches, filmbildendes Polymer mit einem Trübungspunkt von 35°C bis 98°C sind, hergestellt wurde.

Bei dem Gips, dem das erfindungsgemäß eingesetzte Pulver bzw. ein Gemisch aus Wasser und diesem Pulver und gegebenenfalls weiteren Stoffen zugesetzt wird, bzw. dem Gipsanteil der erfindungsgemäßen Pulver kann es sich z.B. um Plaster ($CaSO_4 \cdot 1/2\ H_2O$) in Form von beispielsweise Baugips, Stuckgips oder Isoliergips, oder andere Gipsarten, wie Estrichgips, Marmorgips, Anhydrit oder Mischungen von Plaster und Löschkalk handeln.

Bei dem Si-gebundenen Wasserstoff enthaltenden Organopolysiloxan, das bei dem erfindungsgemäßen Verfahren eingesetzt wird oder in den erfindungsgemäßen Gipspulvern vorliegt, handelt es sich vorzugsweise um solches der Formel

$$(CH_3)_3SiO(SiHCH_3O)_y[Si(CH_3)_2O]_xSi(CH_3)_3, \quad (I)$$

worin x 0 oder eine ganze Zahl im Wert von mindestens 1 und y eine ganze Zahl im Wert von mindestens 3 und mindestens das 3-fache, insbesondere mindestens das 13-fache von x ist, wobei die Summe von x + y eine ganze Zahl mit einem solchen Wert ist, daß die durchschnittliche Viskosität dieser Organopolysiloxane 10 bis 25 $mm^2.s^{-1}$ beträgt.

Bei dem erfindungsgemäßen Verfahren kann eine Art von derartigem Organopolysiloxan verwendet werden. Bei dem erfindungsgemäßen Verfahren können aber auch Gemische aus mindestens zwei verschiedenen Arten derartiger Organopolysiloxane verwendet werden. Dementsprechend können die erfindungsgemässen Pulver eine Art von derartigem Organopolysiloxan enthalten. Sie können aber auch Gemische aus mindestens zwei verschiedenen Arten derartiger Organopolysiloxane enthalten.

Zusätzlich zu mindestens einem Organopolysiloxan der oben angegebenen Formel können bei dem erfindungsgemäßen Verfahren mitverwendet werden und die erfindungsgemäßen Pulver enthalten mindestens eine organische Siliciumverbindung der Formel

$$R_a H_b Si(OR^1)_c(OH)_d O_{\frac{4-a-b-c-d}{2}} \qquad , \qquad (II)$$

worin R gleiche oder verschiedene, einwertige, gegebenenfalls halogenierte Kohlenwasserstoffreste mit 1 bis 18 Kohlenstoffatom(en) je Rest, R¹ gleiche oder verschiedene Alkylreste mit 1 bis 4 Kohlenstoffatom(en) je Rest bedeutet, a 0, 1, 2 oder 3, durchschnittlich 0,00 bis 1,8, b 0 oder 1, durchschnittlich 0,00 bis 1, c 0, 1, 2 oder 3, durchschnittlich 0,01 bis 2,0 und d 0, 1, 2 oder 3, durchschnittlich 0,00 bis 0,5 ist.

Beispiele für Kohlenwasserstoffreste R sind Alkylreste, wie der Methyl-, Ethyl-, n-Propyl-, Isopropyl- und 2-Ethylhexylrest, sowie Butyl-, Hexyl- und Octadecylreste; Kohlenwasserstoffreste mit mindestens einer aliphatischen Doppelbindung, wie der Vinyl-, Allyl-, Ethylallyl- und Butadienylrest, Cycloalkyl- und Alkylcycloalkylreste, wie der Cyclohexylrest und Methylcyclohexylreste; Arylreste, wie der Phenylrest und Xenylreste; Alkarylreste, wie Tolylreste; und Aralkylreste, wie der Benzylrest.

Beispiele für halogenierte Kohlenwasserstoffreste R sind der 3,3,3-Trifluorpropylrest und Chlorphenylreste.

Kohlenwasserstoffreste, die frei von aliphatischen Doppelbindungen sind, sind als Reste R bevorzugt.

Bei den Alkylresten R¹ kann es sich um den Methyl-, Ethyl-n-Propyl-, Isopropyl-, n-Butyl-, sec.-Butyl- oder tert.-Butylrest handeln.

Vorzugsweise wird bei dem erfindungsgemäßen Verfahren organische Siliciumverbindung der Formel (II) in Mengen von höchstens 400 Gewichtsprozent, bezogen auf das Gewicht der jeweiligen Menge von Organopolysiloxan der Formel (I) mitverwendet. Dementsprechend enthalten die erfindungsgemäßen Pulver organische Siliciumverbindung der Formel (II) vorzugsweise in Mengen von höchstens 400 Gewichtsprozent, bezogen auf das Gewicht der jeweiligen Menge von Organopolysiloxan der Formel (I).

Bei den wasserlöslichen, filmbildenden Polymeren mit einem Trübungspunkt von 35°C bis 98°C, vorzugsweise 40°C bis 95°C, kann es sich beispielsweise um durch teilweise Verseifung von Polyvinylacetat hergestellte Polyvinylalkohole mit einer Verseifungszahl (= mg KOH, die zur Verseifung der restlichen Acetylgruppen erforderlich sind) von 150 bis 240, vorzugsweise 170 bis 230, und einem viskosimetrisch ermittelten Molekulargewicht von 15 000 bis 100 000, vorzugsweise 20 000 bis 75 000, Hydroxypropylcellulosen, Aminoethylhydroxypropylcellulosen, Hydroxypropyl-methyl-cellulosen oder Hydroxyethyl-methyl-cellulosen, in geeigneter Weise modifizierte Stärken oder um Gemische aus mindestens zwei derartiger Polymeren handeln. Durch teilweise Verseifung von Polyvinylacetat hergestellte Polyvinylalkohole sind besonders bevorzugt.

Die hier in der Beschreibung der Erfindung und mindestens zwei Patentansprüchen angegebenen Werte von Trübungspunkten wurden jeweils nach DIN (Deutsche Industrie Norm) 53 917 vom Januar 1981 bei in reinem Wasser gelösten Polymer bestimmt.

Wasserlösliches, filmbildendes Polymer mit einem Trübungspunkt von 35°C bis 98°C wird bei der Herstellung der erfindungsgemäß verwendeten, durch Sprühtrocknung hergestellten Pulver vorzugsweise in Mengen von 3 bis 60 Gewichtsprozent, insbesondere 5 bis 15 Gewichtsprozent, jeweils bezogen auf die Gesamtmenge von zur Herstellung des jeweiligen Pulvers verwendeter organischer Siliciumverbindung, eingesetzt. Dementsprechend enthalten die erfindungsgemäßen Pulver, wasserlösliches, filmbildendes Polymer mit einem Trübungspunkt von 35°C bis 98°C vorzugsweise in Mengen von 3 bis 60 Gewichtsprozent, insbesondere 5 bis 15 Gewichtsprozent, jeweils bezogen auf die Gesamtmenge von zur Herstellung des jeweiligen Pulvers verwendeter organischer Siliciumverbindung.

In den zu versprühenden Gemischen beträgt die Menge von Wasser vorzugsweise 45 bis 95 Gewichtsprozent, insbesondere 60 bis 85 Gewichtsprozent, jeweils bezogen auf das Gesamtgewicht des jeweils zu versprühenden Gemisches.

Die Sprühtrocknung der Gemische, deren Bestandteile mindestens Wasser, Si-gebundenen Wasserstoff enthaltendes Polysiloxan und wasserlösliches, filmbildendes Polymer mit einem Trübungspunkt von 35°C bis 98°C sind, kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe in einem erwärmten Trockengasstrom durchgeführt werden.

Vorzugsweise beträgt die Eingangstemperatur des Trockengasstroms, wobei es sich bevorzugt um Luft handelt, in die Sprühtrocknungs-Vorrichtung 110°C bis 250°C und die Austrittstemperatur des beim Trocknen gebildeten Gasstroms 60° bis 100°C, insbesondere 65° bis 95°C.

Zusätzlich zu organischer Siliciumverbindung und wasserlöslichem, filmbildenden Polymer mit einem Trübungspunkt von 35° bis 98°C können die bei dem erfindungsgemäßen Verfahren verwendeten oder in den erfindungsgemäßen Gipspulvern enthaltenen, durch Sprühtrocknung erzeugten Pulver gegebenenfalls weitere Stoffe enthalten, vorzugsweise jedoch nur in Mengen, die gewährleisten, daß die durch Sprühtrocknung erzeugten Pulver, bezogen auf das Gesamtgewicht des jeweiligen Pulvers (berechnet als wasserfreies Pulver) 40 bis 97 Gewichtsprozent, insbesondere 70 bis 90 Gewichtsprozent, organische Siliciumverbindung enthalten. Beispiele für solche weiteren Stoffe sind bzw. können sein mit Wasser mischbare Lösungsmittel, wie Diacetonalkohol, mit Wasser nicht mischbare Lösungsmittel, wie Gemische von Xylolisomeren, andere ionogener oder nichtionogene Emulgatoren als wasserlösliche, filmbildende Polymere mit einem Trübungspunkt von 35° bis 98°C, wie Natriumlaurylsulfat, Fungicide, Antischaummittel, lösliche Farbstoffe, Pigmente, Füllstoffe, bzw. Antibackmittel mit einer Oberfläche von mindestens 50 m²/g, wie pyrogen erzeugtes Siliciumdioxid, Füllstoffe bzw. Antibackmittel mit einer Oberfläche von weniger als 50m²/g, wie Kreidepulver, nadelförmiges Calciumcarbonat und Quarzmehl,sowie Kondensationskatalysatoren, wie Di-n-butylzinndilaurat, Di-2-ethylhexylzinndilaurat, Zirkoniumoktoate, Titanbutylate und Platinverbindungen bzw. Platinkomplexe.

Anstatt im Gemisch mit Wasser und mindestens Organopolysiloxan, das Si-gebundenen Wasserstoff enthält, sowie wasserlöslichem, filmbildenden Polymer mit einem Trübungspunkt von 35° bis 98°C können Antiblock- (Antiback-) mittel ebenso wie auch andere der oben erwähnten zusätzlichen Stoffe zumindest teilweise auch getrennt von dem der Sprühtrocknungs-Vorrichtung zugeführten, Organopolysiloxan enthaltendem Gemisch in die Vorrichtung, in der die Sprühtrocknung stattfindet, eingeführt, und/oder mit dem durch Sprühtrocknung erhaltenem Gut vor dessen Eintritt in das für dieses Gut bestimmte Auffanggefäß vermischt werden. Die Antiblockmittel sind meist anorganische feste Stoffe mit mittleren Teilchengrößen von 0,001 bis 50 mikrometer, insbesondere 0,01 bis 0,1 mikrometer. Es kann sich dabei z.B. um Aluminiumsilikate, kolloidales Siliciumdioxidgel, gefälltes Siliciumdioxid mit einer Oberfläche von mindestens 50 m²/g, pyrogen erzeugtes Siliciumdioxid, gemahlene Tone, Leichtspat, Talkum, Zemente, Kreidepulver oder Diatomeenerde handeln.

Diese Antiblockmittel können hydrophobiert sein, beispielsweise, weil auf ihre Oberfläche Hexamethyldisiloxan einwirken gelassen wurde.

Wenn Antiblockmittel mitverwendet werden, werden sie vorzugsweise in Mengen von 0,5 bis 20 Gewichtsprozent, insbesondere 1 bis 5 Gewichtsprozent, jeweils bezogen auf das Gesamtgewicht der im jeweiligen Pulver enthaltenen organischen Siliciumverbindung, eingesetzt.

Vorzugsweise wird bei dem erfindungsgemäßen Verfahren das Pulver, das zumindest organische Siliciumverbindung der Formel (I) und wasserlösliches, filmbildendes Polymer mit einem Trübungspunkt von 35° bis 98°C enthält, dem Gips in Mengen von 0,05 bis 5 Gewichtsprozent, insbesondere 0,2 bis 1,0 Gewichtsprozent, jeweils bezogen auf das Gewicht der jeweils verwendeten Menge von Gips, zugesetzt.

Dementsprechend enthalten die erfindungsgemäßen Gipspulver Pulver, das zumindest organische Siliciumverbindung der Formel (I) und wasserlösliches Polymer mit einem Trübungspunkt von 35° bis 98°C enthält,vorzugsweise in Mengen von 0,05 bis 5 Gewichtsprozent, insbesondere 0,2 bis 1,0 Gewichtsprozent, jeweils bezogen auf das Gewicht ihres Gehaltes an Gips.

Zusätzlich zu Gips und durch Sprühtrocknung hergestelltem Pulver der erfindungsgemäß verwendeten Art kann der bei dem erfindungsgemäßen Verfahren verwendete Gips und erfindungsgemäßes Gipspulver für Gips übliche Zusatzmittel und Zuschlagstoffe enthalten. Beispiele für derartige zusätzliche Stoffe sind Abbindebeschleuniger und -verzögerer, wie Kaliumsulfat, Calciumsulfatdihydrat, Natriumcitrat und Kaliumtartrat, Stärke und Verdickungsmittel.

Bei dem erfindungsgemäßen Verfahren kann das durch Sprühtrocknung eines Gemisches, dessen Bestandteile mindestens Wasser, Si-gebundenen Wasserstoff enthaltendes Organopolysiloxan und wasserlösliches, filmbildendes Polymer mit einem Trübungspunkt von 35° bis 98°C sind, hergestellte Pulver als solches oder in mit Wasser verdünnter Form dem Gips, der trocken sein oder bereits mit Wasser vermischt sein kann, wobei trockener Gips und trockenes, Si-gebundenen Wasserstoff enthaltendes, durch Sprühtrocknung hergestelltes Pulver bevorzugt sind, zugesetzt werden.

Das erfindungsgemäße Verfahren und die erfindungsgemäßen Gipspulver können überall eingesetzt werden, wo es erwünscht ist, wasserabweisende Gegenstände, wie Formkörper, Überzüge oder Füllungen von Fugen oder ähnlichen Leerräumen, herzustellen, beispielsweise bei der Verarbeitung von bzw. in Form von Spachtelmassen, Fugenfüllmassen, Gipsklebern und Gipsputzen sowie zur Herstellung von Gipsplatten und Gipskartonplatten, wobei bei diesen Herstellungen vollautomatische Produktionsanlagen verwendet werden können.

Es ist überraschend, daß der verhältnismäßig hohe Anteil von die Redispergierbarkeit von organischer Siliciumverbindung gewährleistendem wasserlöslichem Polymer das Wasserabweisungsvermögen von nach dem erfindungsgemäßen Verfahren oder aus erfindungsgemäßem Gipspulver hergestellten Gegenständen nicht merklich beeinträchtigt.

In den folgenden Beispielen beziehen sich alle Angaben von Teilen und Prozentsätzen auf das Gewicht, wenn nichts anderes angegeben ist.

Beispiel 1

a) Eine Emulsion von 450 Teilen eines durch Trimethylsiloxygruppen endblockierten Methylhydrogenpolysiloxans mit einer Viskosität von 20 $mm^2.s^{-1}$ bei 25° C in einer Lösung von 50 Teilen eines durch teilweise Verseifung von Polyvinylacetat hergestellten Polyvinylalkohols mit einer Verseifungszahl von 223, einem viskosimetrisch bestimmtem Molekulargewicht von 27 000 und einem Trübungspunkt von 45° C in 1450 Teilen Wasser wird in einem mit einer Drallzerstäuberdüse arbeitendem Sprühtrockner (Nubilosa AJM 014, wobei es sich bei der Bezeichnung "Nubilosa" um ein registriertes Warenzeichen handeln dürfte) bei einem Düsendruck von 5300 hPa (abs.), einem Durchsatz von 2 l/Stunde, einer Lufteintrittstemperatur von 165° C und einer Gasaustrittstemperatur von 85° C in ein Pulver umgewandelt. Diesem Pulver werden vor seinem Eintritt in das Auffanggefäß 2 %, bezogen auf das Gewicht des in dem Pulver enthaltenen Organopolysiloxans, durch Behandlung mit Hexamethyldisiloxan hydrophobiertes Siliciumdioxid mit einer BET-Oberfläche von 110 ± 30 $m^2/g$ zugesetzt.

b) In den in der folgenden Tabelle I angegebenen Mengen wird Pulver, dessen Herstellung vorstehend unter a) beschrieben wurde, in einem Mischer (Zwangsmischer Modell 1551 der Fa. Tonindustrie Prüftechnik GmbH, D - 1000 Berlin ) mit Gipspulver vermischt. Zu der so erhaltenen Mischung werden 0,8 Teile entionisiertes Wasser je Teil Gips gegeben. Die so erhaltenen Gipsaufschlämmungen werden in einem mit 1000 Umdrehungen je Minute betriebenen Turbinenrührer 30 Sekunden gerührt und dann in runde Formen (Durchmesser: 8 cm, Höhe: 2 cm) aus Polyvinylchlorid gegossen. Nach dem Erstarren werden die so erhaltenen Gipsscheiben 24 Stunden bei 40° C und 6 Tage bei Raumtemperatur an der Luft aufbewahrt. Danach werden die so getrockneten Gipsscheiben gewogen und dann 2 Stunden in Wasser gelegt, wobei sich die Oberfläche des Wassers 5 cm über der oberen Seite der Gipsscheiben befindet. Schließlich werden die Gipsscheiben aus dem Wasser genommen, das Wasser wird abtropfen gelassen und die Scheiben werden erneut gewogen.

Tabelle 1

| Menge von dem Gips zugesetztem Pulver, %, bezogen auf das Gewicht vom Gipspulver | Gewichtszunahme durch Wasseraufnahme, % |
|---|---|
| 0,0 +) | 47,5 |
| 0,2 | 13,0 |
| 0,3 | 7,7 |
| 0,5 | 3,3 |
| 1,0 | 2,5 |

+) = Vergleichsversuch

Beispiel 2

In jeweils 80 Teilen entionisiertem Wasser wird in den in der folgenden Tabelle angegebenen Menge Pulver, dessen Herstellung in Beispiel 1 unter a) beschrieben wurde, verteilt. Die so erhaltenen wäßrigen Dispersionen werden mit jeweils 100 Teilen trockenem Gips vermischt. Aus den so erhaltenen Gipsaufschlämmungen werden wie in Beispiel 1 beschrieben, Gipsscheiben hergestellt, die dann wie ebenfalls in Beispiel 1 beschrieben, behandelt werden.

## Tabelle 2

| Menge von dem Wasser zugesetzten Pulver, %, bezogen auf das Gewicht vom Gipspulver | Gewichtszunahme durch Wasseraufnahme, % |
|---|---|
| 0,2 | 25,0 |
| 0,3 | 5,4 |
| 0,5 | 1,7 |
| 1,0 | 1,1 |

### Vergleichsversuch a

Aus 0,45 Teilen des durch Trimethylsiloxygruppen endblockierten Methylhydogenpolysiloxans mit einer Viskostät von 20 mm$^2$·s$^{-1}$ 1 bei 25°C und 80 Teilen von Fremdionen befreitem Wasser wird mittels des bei 1000 Umdrehungen je Minute betriebenen Turbinenrührers innerhalb von 30 Sekunden eine Emulsion hergestellt. Diese Emulsion wird mit 100 Teilen trockenem nem Gips versetzt und die so erhaltene Mischung 30 Sekunden mit dem bei 1000 Umdrehungen je Minute betriebenen Turbinenrührer gerührt. Aus der so erhaltenen Gipsaufschlämmung werden, wie in Beispiel 1 beschrieben, Gipsscheiben hergestellt, die dann, wie ebenfalls in Beispiel 1 beschrieben, behandelt werden. Die Gewichtszunahme durch Wasseraufnahme beträgt 3,5 %.

### Vergleichsversuch b

0,6 Teile einer Emulsion aus 50 % des durch Trimethylsiloxygruppen endblockierten Methylhydrogenpolysiloxans mit einer Viskosität von 20 mm$^2$·s$^{-1}$, 2,5 % des in Beispiel 1 unter a) näher beschriebenen Polyvinylalkohols und 47,5 % Wasser werden mit 80 Teilen Wasser und 100 Teilen trockenem Gips versetzt und die so erhaltene Mischung wird 30 Sekunden mit dem bei 1000 Umdrehungen je Minute betriebenen Turbinenrührer gerührt. Aus der so erhaltenen Gipsaufschlämmung werden, wie in Beispiel 1 beschrieben, Gipsscheiben hergestellt, die dann, wie ebenfalls in Beispiel 1 beschrieben, behandlet werden. Die Gewichtszunahme durch Wasseraufnahme beträgt 3,1 %.

## Ansprüche

1. Verfahren zur Herstellung von wasserabweisenden Gegenständen aus Gips unter Verwendung von Si-gebundenen Wasserstoff enthaltendem Organopolysiloxan,
**dadurch gekennzeichnet,**
daß das Si-gebundenen Wasserstoff enthaltende Organopolysiloxan in Form eines Pulvers eingesetzt wird, das durch Sprühtrocknung eines Gemisches, dessen Bestandteile mindestens Wasser, Si-gebundenen Wasserstoff enthaltendes Organopolysiloxan und wasserlösliches, filmbildendes Polymer mit einem Trübungspunkt von 35° bis 98°C sind, hergestellt wurde.

2. Hydrophobierungsmittel enthaltende Gipspulver, wobei das Hydrophobierungsmittel mindestens zum Teil Organopolysiloxan ist, das Si-gebundenen Wasserstoff enthält,
**dadurch gekennzeichnet,**
daß das Si-gebundenen Wasserstoff enthaltende Organopolysiloxan in einem Pulver vorliegt, das durch Sprühtrocknung eines Gemisches, dessen Bestandteile mindestens Wasser, Si-gebundenen Wasserstoff enthaltendes Organopolysiloxan und wasserlösliches, filmbildendes Polymer mit einem Trübungspunkt von 35° bis 98°C sind, hergestellt wurde.

3. Verfahren nach Anspruch 1 oder Pulver nach Anspruch 2,
**dadurch gekennzeichnet,**
daß das wasserlösliche, filmbildende Polymer mit einem Trübungspunkt von 35° bis 98°C mindestens ein durch teilweise Verseifung von Polyvinylacetat hergestellter Polyvinylalkohol mit einer Verseifungszahl von 170 bis 230 und einem viskosimetrisch ermitteltem Molekulargewicht von 20 000 bis 75 000 ist.

## Claims

1. Process for the production of water-repellent objects made from gypsum using organopolysiloxane containing Si-bound hydrogen,
characterized in that
the organopolysiloxane containing Si-bound hydrogen is employed in the form of a powder which has been prepared by spray-drying a mixture whose components are at least water, organopolysiloxane containing Si-bound hydrogen and a water-soluble, film-forming polymer having a turbidity point from 35° to 98°C.

2. Gypsum powder containing a waterproofing agent, the waterproofing agent being at least partly an organopolysiloxane which contains Si-bound hydrogen
characterized in that
the organopolysiloxane containing Si-bound hydrogen is present in a powder which has been prepared by spray-drying a mixture whose components are at least water, organopolysiloxane containing Si-bound hydrogen and a water-soluble, film-forming polymer having a turbidity point from 35° to 98°C.

3. Process according to Claim 1 or powder according to Claim 2,
characterized in that
the water-soluble, film-forming polymer having a turbidity point from 35° to 98°C is at least one polyvinyl alcohol which has been prepared by partial saponification of polyvinyl acetate, has a saponification number from 170 to 230 and a viscosimetrically determined molecular weight from 20,000 to 75,000.

## Revendications

1. Procédé pour préparer des objets hydrophobes, en du sulfate de calcium ou du plâtre, que l'on obtient en utilisant du poly(organosiloxane) contenant de l'hydrogène lié à du Si, procédé caractérisé en ce qu'on utilise le poly(organosiloxane) contenant de l'hydrogène lié a du Si, sous forme d'une poudre qui a été préparée par séchage par atomisation d'un mélange dont les constituants sont formés au moins par de l'eau, du poly(organosiloxane) contenant de l'hydrogène lié à Si et du polymère filmogène hydrosoluble ayant un point de trouble de 35° à 98°C.

2. Poudre de sulfate de calcium, ou de plâtre, contenant un agent d'imperméabilisation, cet agent d'imperméabilisation consistant au moins en partie en un poly(organosiloxane) contenant de l'hydrogène lié à Si, poudre caractérisée en ce que le poly(organosiloxane) contenant de l'hydrogène lié à Si est présent dans une poudre qui a été préparée par séchage par atomisation d'un mélange, dont les constituants sont formés au moins par de l'eau, par du poly(organosiloxane) contenant de l'hydrogène lié à Si et par un polymère filmogène hydrosoluble ayant un point de trouble de 35° à 98°C.

3. Procédé selon la revendication 1, ou poudre selon la revendication 2, caractérisé(e) en ce que le polymère filmogène hydrosoluble ayant un point de trouble de 35° à 98°C est constitué par au moins un poly(alcool vinylique), préparé par saponification partielle de poly(acétate de vinyle), ayant un indice de saponification de 170 à 230 et ayant un poids moléculaire, déterminé par viscosimétrie, de 20 000 à 75 000.